# EUROPEAN PATENT APPLICATION

(11) **EP 1 266 744 A1**
(43) Date of publication of application: **18.12.2002**
(21) Application number: 02008615.3
(22) Date of filing: 17.04.2002
(51) Int. Cl.: B29C 45/84

(54) **Lateral protection of the closing area of the moulds to be mounted onto presses**

(30) Priority: 13.06.2001 IT VI20010135
(71) Applicant: Virginio Nastri S.R.L., 36071 Arzignano (Vicenza) (IT)
(72) Inventor: Virginio, Domenico, 36071 Arzignano (Vicenza) (IT); Virginio, Luca, 36072 Chiampo (Vicenza) (IT); Virginio, Marco, 36071 Arzignano (Vicenza) (IT); Virginio, Matteo, 36071 Arzignano (Vicenza) (IT)
(74) Representative: Bettello, Pietro, Dott. Ing.

(57) **Abstract**

The invention refers to a lateral protection of the closing area of the moulds to be mounted onto presses. It is characterized in that it involves the use of a flexible sheet, which, during the alternating movement to open and close the matrixes of the mould, stands always tight and, at the same time, it is never subjected to traction stresses or to sudden and quick stretchings

## Description

The present invention relates to a lateral protection of the closing area of the moulds to be mounted onto presses.

Presses are basically made with two matrixes which support the mould: one being fixed and integral with the base of the machine and the other one being mobile and sliding in horizontal side-members.

The moulding action is performed by approaching the mobile matrix to the fixed one and then, in the moulding of plastic materials, by injecting the plastic material inside the closed mould.

Successively the mobile matrix moves away from the fixed one so as to allow the exit from the mould and the discharge of the moulded piece, which falls towards an underlying collector due to the force of gravity.

At the present state of the art, the lateral closing of the mould is made by using vertical, flexible and rectractable bulkheads.

This system, however, has the drawback that, due to the hard working conditions of the presses (high temperatures and a production cycle that involves the opening and the closing of the mould at very high frequencies, even every 4-6 seconds, and therefore the quick and continuous compression and expansion of the bulkhead) on the material the bulkhead is made of it may occur some tearing or the breaking; disadvantageously, this fact involves the stop of the machine to substitute the damaged items, with negative consequences on the working productivity.

Object of the present invention is that of realising a lateral protection of the closing area of the moulds to be mounted onto presses, that is not subject to wear and tear, even if subjected to the hardest working conditions.

This object is obtained by providing that the lateral protection of this area is realised by means of a lateral wall made of a flexible sheath, which, during its alternating opening and closing movement, stands always perfectly plain.

A further object of the present invention is that of providing that the flexible sheath, in its alternating opening and closing movement, is never subjected to traction stresses or to quick stretchings, even if it stands always well tight.

A further object of the present invention is to provide a lateral protection of the closing area of the moulds, which could be applied to all types of presses simply and quickly, without any modification of the machine itself.

Under a constructive point of view, the device which realises these objects is made with two little and reciprocally parallel little shafts, on which the two ends of the flexible sheath are anchored, sheath which constitutes the protection wall of the closing area of the moulds.

Specifically, a first little shaft is fixed, that means that it does not modify its position with respect to the base of the machine, instead the second little shaft has two movements which act at the same time: the first one is a longitudinal movement along the base of the machine and the second one is a rotation around its longitudinal axis.

In such a way it is realised the progressive winding or unwinding of the flexible sheath on the rotating little shaft, according to the fact that said sheath approaches to or goes away from the little shaft, simultaneously to the approaching or to the departure of the fixed matrix from the mobile matrix of the mould.

In one possible embodiment the fixed little shaft is integral with the fixed matrix, while the mobile little shaft is integral with the mobile matrix and moreover it engages with a mechanism which gives it also the simultaneous axial rotation, in one direction or in its opposite, with regard to the opening or closing movement of said mobile matrix.

In a possible second embodiment, the mobile little shaft is put in rotation by electromechanical devices, whose working is regulated by a suitable electronic program.

According to the present invention, the total length of the flexible sheath, when it stands completely tight, is at least of the same length, or still better, slightly longer, of the maximum distance at which the two matrixes stand when reciprocally at a distance.

In such a way it is then possible to use the same flexible sheath for runs of the mobile matrix with different width.

The present invention will be now described in a more detailed way with reference to one possible embodiment, which is given only as an illustrative, but not limiting, example, with reference to the drawings, in which:
fig. 1 is a schematic elevational and front view of the device of the present invent ion;
fig. 2 is a plan view of the device of fig. 1;
fig. 3 is a lateral view of the above, cut along line III-III of fig. 1;
figg. 4, 5 and 6 are the three ortogonal views of the above, cut along the line IV-IV of fig. 1 of the mechanism which moves the device of the invention;
fig. 7 is a detailed view, cut along the line VII-VII of fig. 1, of the blocking system of the fixed little shaft.

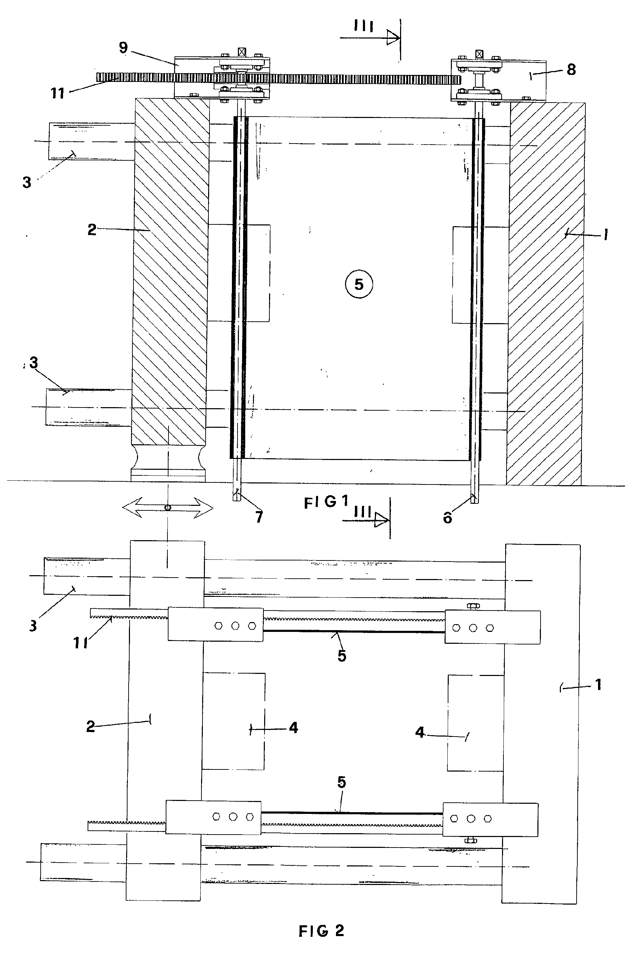

As it can be seen in figg. 1-3, the device of lateral protection of the closing area of the moulds, defined between the two matrixes, respectively the fixed matrix 1 and the mobile matrix 2, which can slide on the side-members 3 and onto which it is applied the mould 4, is made of a flexible sheath 5, anchored on the two vertical little shafts 6 and 7, which, by means of the stirrups 8 and 9, are integral to the fixed matrix 1 and to the mobile matrix 2, respectively.

The characteristc of novelty of the invention is represented by the fact that the flexible sheath 5 is always well tight, in any position the mobile matrix 2 is, when the same slides alternatively to close/open the mould.

This optimal condition is realised by providing that the flexible sheath is linked to the vertical shaft 6 by means of an edge, the vertical shaft being fixed, while with its opposite border it can wind/unwind on the mobile little shaft 2 due to the fact that the same rotates at the same time around its longitudinal axis, besides moving in a linear way togheter with the mobile matrix 2.

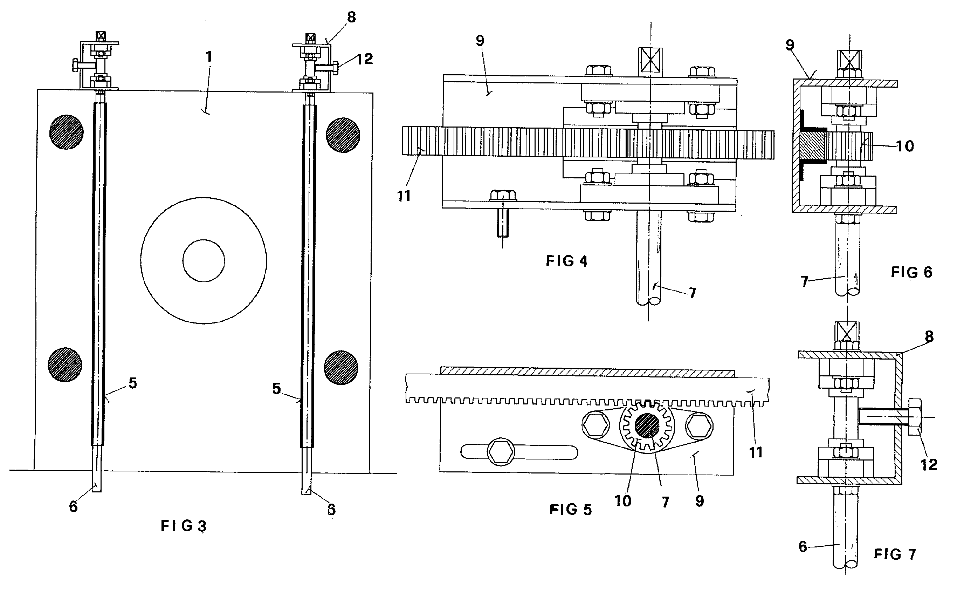

As it can be seen in figg. 3 to 6, the axial rotation of the little mobile shaft 2 is realised by furnishing the same with a toothed pinion 10, which engages with a fixed rack 11, integral with the stirrup 9.

A further feature of the invention is represented by the fact that it is possible to regulate the length of the flexible sheath 5, extended, in order to fit it to the various openings of the closing area of the moulds.

This is realised by providing that the exceeding parts of the flexible sheath 5, that means the section of the sheath which is not unwound and extended during the opening of the mould, is wound on the fixed little shaft 1, which is then blocked by means of the screw 12 to the stirrup 8, the one applied to the fixed matrix1.

It is of course possible to realise embodiments which are different from the described one, without departing from sphere of the claims of the invention.

## Claims

1. LATERAL PROTECTION OF THE CLOSING AREA OF THE MOULDS TO BE MOUNTED ONTO PRESSES, **characterised by** the fact that it provides the use of a flexible sheath, which, during its alternating opening and closing movement of the matrixes of the mould, stands always perfectly tight and at the same time it is never subjected to traction stresses or to sudden quick and stretchings.

2. LATERAL PROTECTION, according to claim 1, **characterised by** the fact that it provides the use of two reciprocally parallel little shafts, on which the two ends or edges of the flexible sheath, which realises the protection wall of the closing area of the moulds, are anchored.

3. LATERAL PROTECTION, according to claims 1 and 2, **characterised by** the fact thazt a first little shaft is fixed, that means that it does not modify its position with respect to the base of the machine, instead the second little shaft has two movements which act at the same time: the first one is a longitudinal movement along the base of the machine and the second one is a rotation around its longitudinal axis.

4. LATERAL PROTECTION, according to claim 3, **characterised by** the fact that it realises the progressive winding or unwinding of the flexible sheath on the rotating little shaft, according to the fact that the above sheath approaches to or goes away from the little shaft, simultaneously with the approaching or with the departure of the fixed matrix from the mobile matrix of the mould.

5. LATERAL PROTECTION, according to claim 4, **characterised by** the fact that the fixed little shaft is integral with the fixed matrix, while the mobile little shaft is integral with the mobile matrix and moreover it engages with a mechanism, which gives it also the simultaneous axial rotation, in one direction or in its opposite, with regard to the opening or closing movement of said mobile matrix.

6. LATERAL PROTECTION, according to claim 4, **characterised by** the fact that the mobile little shaft is put in rotation by electromechanical devices working by means of a suitable electronic program.

7. LATERAL PROTECTION, according to claim 4, **characterised by** the fact that the flexible sheath, when tight, has a length which is longer than the maximum distance or opening between the two matrixes, when they are completely open.

8. LATERAL PROTECTION, according to claim 7, **characterised by** the fact that it is then possible to use the same flexible sheath for runs of the mobile matrix with different width.

9. LATERAL PROTECTION, according to claim 8, **characterised by** the fact that the part of the flexible sheath which exceeds with respect to the width of the displacement of the fixed matrix in relation to the mobile matrix, is previously wound and blocked on one of the two little shafts, preferably the fixed one.

10. LATERAL PROTECTION, according to one or more of the previous claims, defined between the two matrixes, respectively, the fixed one (1) and the mobile one (2), sliding on side-members (3) and onto which the mould (4) is applied, **characterised by** the fact that it comprises a flexible sheath (5), anchored on the two little shafts (6, 7) by means of the stirrups (8, 9), integral with the fixed matrix and with the mobile one, respectively.

11. LATERAL PROTECTION, according to claim 10, **characterised by** the fact that the flexible sheath (5) is always well tight, in any position the mobile matrix (2) is, when the same slides alternatively to close/open the mould.

12. LATERAL PROTECTION, according to claim 11, **characterised by** the fact that the flexible sheath (5) is linked to the vertical fixed shaft (6) by means of an end edge, while with its opposite edge it can wind/ unwind on the mobile little shaft (7), this second little shaft moving in a linear way together with the mobile matrix 2 and rotating, at the same time, around its longitudinal axis.

13. LATERAL PROTECTION, according to claim 12, **characterised by** the fact that the axial rotation of the mobile little shaft (2) is realised by furnishing the same with a toothed pinion (10), which engages with a fixed rack (11), integral with the stirrup(9), the one applied to the mobile matrix (2).

14. LATERAL PROTECTION, according to claim 13, **characterised by** the fact that the exceeding part of the flexible sheath (5), that means the section of the sheath which is not unwound and extended during the opening of the mould, is wound on the fixed little shaft (1), which is then blocked by means of the screw (12) to the stirrup (8), the one applied to the fixed matrix (1).
